# EUROPÄISCHE PATENTSCHRIFT

(11) **EP 1 082 585 B1**
(45) Veröffentlichungstag und Bekanntmachung des Hinweises auf die Patenterteilung: **17.12.2003**
(21) Anmeldenummer: 99926253.8
(22) Anmeldetag: 16.04.1999
(51) Int. Cl.: G01C 21/00

(54) **VERFAHREN ZUR BESTIMMUNG DER POSITION EINES FAHRZEUGS**
METHOD FOR DETERMINING THE POSITION OF A VEHICLE
PROCEDE DE DETERMINATION DE LA POSITION D'UN VEHICULE

(30) Priorität: 24.04.1998 DE 19818473
(43) Veröffentlichungstag der Anmeldung: 14.03.2001
(73) Patentinhaber: SIEMENS AKTIENGESELLSCHAFT, 80333 München (DE)
(72) Erfinder: SCHUPFNER, Markus, D-93047 Regensburg (DE)
(86) Internationale Anmeldenummer: DE9901145
(87) Internationale Veröffentlichungsnummer: WO99056081

(56) Entgegenhaltungen:
- EP-A2- 0 747 668
- US-A- 5 170 165

## Beschreibung

Die Erfindung betrifft ein Verfahren zur Bestimmung der Position eines Fahrzeugs auf der Grundlage einer gemessenen, relativen Fahrzeugposition und anhand digitaler Wegenetzdaten.

Bekannte Navigationsverfahren für Landfahrzeuge versuchen eine durch Koppelnavigation (dead reckoning) gemessene (relative) Position, also eine durch Addition von Vektoren der Fahrzeugbewegung ermittelte Position, auf einem digitalen Straßennetzwerk zu finden. Das digitale Straßennetzwerk besteht aus digitalen Wegenetzdaten mit Segmenten, Knoten, Umrißpunkten, die Straßen beschreiben, Schnittpunkten und Abbiegepunkten.

Wenn ein Fahrzeug beispielsweise ein Abbiegemanöver durchführt, muß die zuvor in der digitalen Straßenkarte gefundene Position der neu gemessenen Fahrzeugposition folgen. Eine neu gemessene Position auf einem Segment oder einer digitalisierten Straße, bzw. auf mehreren in Frage kommenden Segmenten oder digitalisierten Straßen, wird verfolgt, indem eine jeweils gemessene, zurückgelegte Entfernung zur letzten, auf dem Segment (Straße) bestimmten Position addiert wird. Die letze auf dem Segment bestimmte Position wird auf der digitalisierten Straße um die inzwischen zurückgelegte, gemessene Entfernung verschoben.

Jedoch ergeben sich zwischen zwei Meßpunkten häufig Abweichungen zwischen den gemessenen Fahrzeugpositionen und den auf der Straßenkarte ermittelten Positionen. Diese Abweichungen beruhen beispielsweise auf einem Abweichen eines Fahrzeugs in einer Kurve von einer digitalisierten Ideallinie, der Wahl einer Spur mit einem kleineren oder größeren Kurvenradius als derjenigen, die der digitalisierten Straßenkarte zugrunde gelegt ist, auf Fehler bei der Digitalisierung der Straßenkarte oder auf Meßfehler.

Die Patentanmeldung EP 0 747 668 A2 betrifft ein System zur Positionsermittlung, bei dem eine Verschlechterung bei einem Abgleich mit einer Straßenkarte vermieden werden soll, der infolge von Fehlern bei der Winkelmessung auftritt. Hierzu wird ein Mittelwert aus einer Vielzahl von Winkeldifferenzen zwischen einer Straße der Karte und gemessenen Fahrzeugwinkeln gebildet. Um eine gemessene Position auf einem Straßensegment der Karte zu lokalisieren, wird ein Lot auf das betreffende Straßensegment gefällt.

In der Patentschrift US 5,170,165 wird vorgeschlagen, einen Mustervergleich zwischen einem zurückgelegten Pfad und Straßen einer Straßenkarte vorzunehmen. In Frage kommende Positionen auf den Straßen werden ebenfalls durch Fällen von Loten auf die entsprechenden Straßen bestimmt.

Aus der Patentanmeldung EP 0 601 712 A1 ist ein Navigationssystem bekannt, bei dem unterstellt wird, daß eine Fahrzeugposition sich nicht in einer Kartendatenbank wiederfindet, wenn der kleinste Abstand im rechten Winkel zwischen der Fahrzeugposition und der nächsten Straße eine vorbestimmte Entfernung überschreitet.

Aus der Offenlegungsschrift DE 40 33 527 A1 ist eine Navigationseinrichtung bekannt, die mögliche Straßen einer digitalisierten Straßenkarte, auf denen sich die gegenwärtige Position befinden kann, aufgrund einer Auswertung von Fahrtrichtung und Abstand der gemessenen Position zu entsprechenden Straßen ermittelt. Dabei wird ein Fahrzeug gezeigt, dessen Fahrtrichtung mit dem Verlauf von zwei benachbarten Straßen verglichen wird und dessen geringster Abstand jeweils zu den beiden benachbarten Straßen ermittelt wird. Wird zum Ziehen der gemessenen Position auf eine digitalisierte Karte (Map matching) diejenige Position auf der digitalisierten Straße verwendet, die dem Fahrzeug am nächsten ist, das heißt die mit einem Lot auf die Straße bestimmt wird, so können bei Kurvenfahrten Fehler auftreten.

Es ist ein Ziel der Erfindung, ein Verfahren zur Bestimmung der Position eines Fahrzeugs bereitzustellen, das eine verbesserte Genauigkeit für das Verfolgen der gemessenen Fortbewegung eines Fahrzeugs in einem digitalisierten Straßen- oder Wegenetz erlaubt.

Dieses Ziel wird mit einem Verfahren erreicht, wie es in Patentanspruch 1 definiert ist. Vorteilhafte Weiterbildungen der Erfindung sind in den Unteransprüchen angegeben. Dadurch, daß eine Projektion der gemessenen Position auf ein Wegsegment der digitalen Wegenetzdaten im rechten Winkel zur Fahrtrichtung oder zum Verlauf des Wegsegments vorgenommen wird, werden insbesondere bei Kurvenfahrten Längen- und Winkelunterschiede zwischen einem gefahrenen Pfad eines Fahrzeugs und der auf dem digitalisierten Straßennetz verfolgten Wegstrecke automatisch ausgeglichen. Die auf das Segment projizierte Position entspricht der wahrscheinlichsten Fahrzeugposition in dem Segment.

Es können Fehler bei Distanzmessungen, die auf Ungenauigkeiten eine Sensors, eines GPS-System (Global Positioning System) und auf Fehler bei der Digitalisierung von Straßenkarten beruhen, ausgeglichen werden. Dasselbe gilt für die Fahrtrichtungsmessung oder die in den digitalen Wegenetzdaten möglicherweise fehlerbehaftet abgespeicherten Richtungsangaben.

Das erfindungsgemäße Verfahren ermöglicht damit ein besonders exaktes Angleichen der gemessenen Position an eine korrespondierende Position auf einer digitalen (digitalisierten) Straßenkarte.

Als mögliche Fahrzeugposition werden alle Schnittpunkte von rechtwinkligen Projektionslinien mit Segmenten oder Straßen der digitalen Wegenetzdaten behandelt, die sich innerhalb eines definierten Abstands von der Fahrzeugposition befinden.

Ein geeigneter Weg, aus einer Mehrzahl von derart gefundenen Referenz- oder Schnittpunkten die wahre, absolute Fahrzeugposition herauszufinden, besteht darin, nur solche Referenzpunkte (Schnittpunkte) zu berücksichtigen, die auf einer Straße liegen, auf der bei der vorhergehenden Messung ebenfalls ein Referenzpunkt oder mehrere Referenzpunkte gefunden worden sind. Daneben kann ein sich ändernder Abstand zwischen einer Serie gemessener Fahrzeugpositionen und der entsprechenden auf eine Straße projizierten Referenzpunkte als Auswahlkriterium berücksichtigt werden.

Das Verfahren arbeitet besonders genau, wenn bei einem Winkel von weniger als etwa 25° zwischen der Fahrtrichtung eines Fahrzeugs und einem Straßenverlauf (Wegsegment), und bevorzugt von 15° oder weniger, derjenige Punkt des Wegsegments als wahrscheinliche Position angenommen wird, der von einem Wegsegment in rechten Winkel auf die Fahrzeugposition projiziert wird. Damit ist der Referenzpunkt derjenige Punkt auf einem Wegsegment, der den geringsten Abstand zur gemessenen Fahrzeugposition aufweist. Dadurch wird vermieden, daß bei kleinen Auslenkungen eines Fahrzeugs gegenüber einer Ideallinie Ungenauigkeiten bei einer rechtwinkligen Projektion auf ein Segment entstehen. Somit werden Fehler bei der Winkelmessung korrigiert, die zu einem Distanzfehler führen können.

Bei einem kurvigen oder gewundenen Straßenverlauf ist es empfehlenswert diese Schwelle auf einen Wert von etwa 50° und bevorzugt auf einen Wert von 40° zu erhöhen.

Bei Abweichungen von mehr als 90° zwischen der Fahrtrichtung und dem Segmentverlauf wird der korrespondierende Referenzpunkt auf dem Segment durch Addition der seit der letzten Messung zurückgelegten Wegstrecke auf den zuletzt bestimmten Referenzpunkt bestimmt (Verschieben des Referenzpunkts auf dem Segment um die zwischenzeitlich zurückgelegte, gemessene Entfernung). Damit wird beispielsweise bei einer sehr engen Kurve und einer relativen ungenau gemessenen Fahrzeugposition vermieden, daß an dem Segment oder der digitalisierten Straße vorbei projiziert wird.

Weitere Vorteile, Merkmale und Anwendungsmöglichkeiten der Erfindung ergeben sich aus der Beschreibung eines Ausführungsbeispiels in Verbindung mit den Zeichnungen. Es zeigen:
- Figur 1: ein Navigationsgerät zur Durchführung des Verfahrens und
- Figur 2: eine gemessene Fahrstrecke in Bezug auf ein entsprechendes Straßensegment einer digitalisierten Straßenkarte.

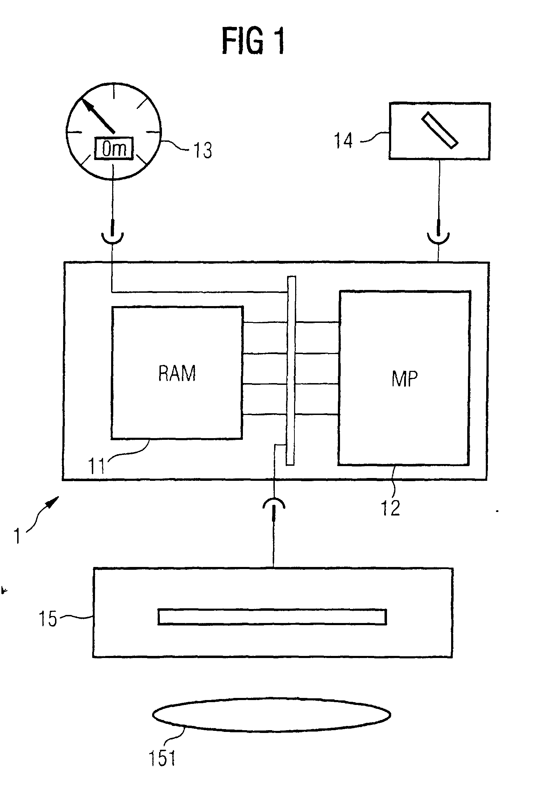

Das in Figur 1 dargestellte Navigationsgerät 1 weist einen Prozessor 12 und einen flüchtigen Speicher 11 auf. Der Prozessor ist mit Sensoren 13 und 14 verbunden, die eine zurückgelegte Entfernung und eine Richtung messen.

Der Sensor 13 ist ein Kilometerzähler eines Kraftfahrzeugs, und der Sensor 14 ist ein Gyroskop. Zusätzlich oder anstelle dieser Sensoren kann beispielsweise auch ein GPS-System als Entfernungs- und/oder Richtungssensor eingesetzt werden.

Auf der Basis der durch die Sensoren 13 und 14 gemessenen Entfernungs- und Richtungswerte errechnet der Prozessor 12 die jeweilige Position des Fahrzeugs.

Über ein CD-ROM-Laufwerk 15 wird der Prozessor 12 mit Wegenetzdaten eines digitalisierten Straßen- oder Wegenetzwerks versorgt, das auf einer CD-ROM 151 gespeichert ist. Neben oder anstelle eines Massenspeichers kann das Navigationssystem Wegenetzdaten auch drahtlos erhalten.

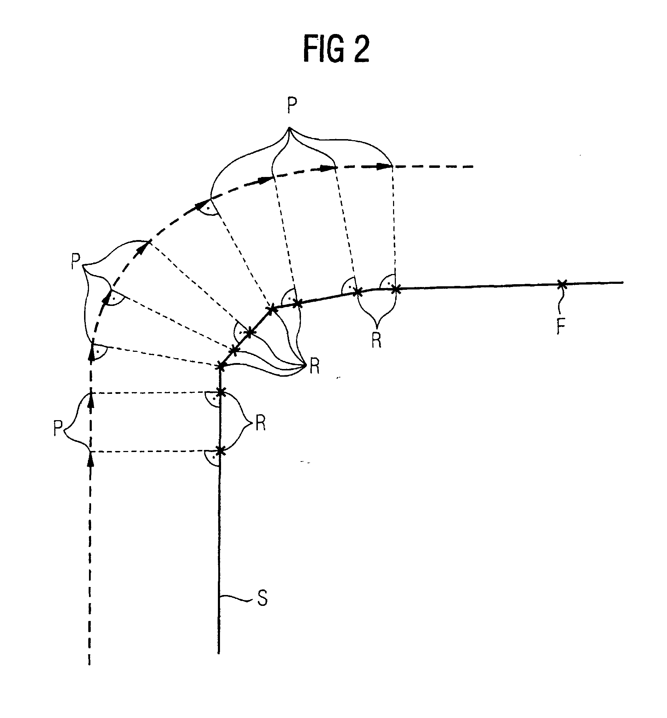

In Figur 2 deuten die gestrichelten Linien eine Fahrtstrecke an, die mittels Koppelnavigation auf der Grundlage der Meßwerte der Sensoren 13 und 14 ermittelt worden ist. Ausgehend von einer definierten Position ist die jeweils zurückgelegte Fahrtstrecke nach Betrag und Richtung addiert worden.

Die Pfeilspitzen stehen für vom Prozessor 12 ermittelte Fahrzeugpositionen P auf der gemessenen Fahrtstrecke, bei denen eine entsprechende Position auf einem Wegsegment der digitalen Straßenkarte gesucht worden ist.

Eine mit S bezeichnete, durchgezogenen Linie stellt ein Straßen- oder Wegsegment der digitalen Straßenkarte dar.

Sowohl die gemessene Fahrtstrecke als auch das Wegsegment S beschreiben eine Kurve mit einem Winkel von 90°. Die gemessene Fahrtstrecke beschreibt einen im Vergleich zum Wegsegment S einen deutlich weiteren Bogen. Die tatsächlich gefahrene oder gemessene Strecke zeichnet sich also durch einen deutlich größeren Kurvenradius als das zugehörige Wegsegment der digitalen Straßenkarte aus. Dies bedeutet, daß bei einem Verfolgen der gemessenen Positionen auf der digitalen Straßenkarte, die auf dem bekannten Addieren der zurückgelegten, gemessenen Wegstrecke entlang des digitalisierten Straßen- oder Wegsegments beruht, das Navigationssystem am Auslauf der Kurve einen deutlich weiter auf dem Wegsegment S vorgerückten Punkt bestimmen würde, als dies der Wirklichkeit entspricht.

Auf dem Wegsegment S sind Referenzpunkte R eingetragen. Ein Referenzpunkt R wird von einer gemessenen, relativen, momentanen Fahrzeugposition P aus ermittelt. Solange der Winkel zwischen der Ausrichtung des Fahrzeugs und dem Verlauf des Wegsegments S nicht größer als 15° ist, wird im rechten Winkel vom Segment S auf das Fahrzeug projiziert. Dies geschieht, indem der geringste Abstand zwischen der Fahrzeugposition P und dem Wegsegment S bestimmt wird.

Beträgt der Winkel zwischen der Fahrzeugausrichtung und dem Verlauf des Wegsegments S mehr als 15°, so wird senkrecht zur Fahrtrichtung von einer relativen Fahrzeugposition P auf das Wegsegment S projiziert, um dort einen Referenzpunkt R zu finden und der gemessenen Position P zuzuordnen. Die Projektion ist jeweils mit gepunkteten Linien angedeutet.

Durch die Projektion der relativen Positionen P im rechten Winkel zur Fahrtrichtung auf das Segment S ergeben sich, wegen des großen Kurvenradius der gemessenen Fahrtstrecke auf dem Wegsegment S, Referenzpunkte R, die deutlich enger beabstandet sind als die entsprechenden relativen Positionen P auf der gemessenen Fahrtstrecke. Auf diese Weise wird der größere, tatsächlich gefahrene Kurvenradius egalisiert, und es werden realistische Positionen auf dem Wegsegment S der digitalen Straßenkarte ermittelt.

Würden die Referenzpunkte R lediglich durch Addition der zurückgelegten Wegstrecken ermittelt, so ergäbe sich nach dem Auslauf der Kurve für die letzte dargestellte Fahrzeugposition nicht der letzte Referenzpunkt R, sondern eine mit F gekennzeichnete falsche Position.

## Patentansprüche

1. Verfahren zur Bestimmung der Position eines Fahrzeugs anhand digitaler Wegenetzdaten mit einem Prozessor (12) und wenigstens einem Sensor (13, 14) zur Bestimmung einer relativen Fahrzeugposition, mit den Schritten:
- eine relative Fahrzeugposition (P) und eine Fahrtrichtung werden von dem Sensor (13, 14) gemessen,
**dadurch gekennzeichnet, daß**
- ein Winkel zwischen der Fahrtrichtung und einem Wegsegment (S) bestimmt wird,
- der Winkel mit einem Vorgabewert verglichen wird und
- dann, wenn der Winkel größer als der Vorgabewert ist, ausgehend von der gemessenen relativen Fahrzeugposition (P) vom Prozessor (12) auf einer Linie, die im Wesentlichen rechtwinklig zur Fahrtrichtung verläuft, ein Referenzpunkt (R) auf dem Wegsegment (S) der digitalen Wegenetzdaten bestimmt wird.

2. Verfahren nach Anspruch 1, **dadurch gekennzeichnet, daß** der Prozessor (12) beiderseits der Fahrzeugposition (P) Referenzpunkte (R) mit allen Wegsegmenten (S) bestimmt, die innerhalb einer definierten Distanz von der Fahrzeugposition (P) sind, um aus der Mehrzahl der Referenzpunkte (R) eine absolute Fahrzeugposition zu bestimmen.

3. Verfahren nach dem vorhergehenden Anspruch, **dadurch gekennzeichnet, daß** fortlaufend die relative Fahrzeugposition (P) und die hierzu gehörigen Referenzpunkte (R) bestimmt und gespeichert werden, und daß derjenige Referenzpunkt (R) als absolute Fahrzeugposition bestimmt wird, der die geringste Entfernung von der Fahrzeugposition aufweist und der sich auf einem Wegsegment (S) befindet, auf der bei der vorhergehenden Messung ein Referenzpunkt gefunden worden ist.

4. Verfahren nach einem der vorhergehenden Ansprüchen, **dadurch gekennzeichnet, daß** bei einem Winkel von 25° oder weniger zwischen einer Fahrtrichtung und dem Verlauf eines Wegsegments (S), als Referenzpunkt (R) derjenige Punkt des Wegsegments (S) gewählt wird, der den geringste Abstand zur Fahrzeugposition (P) hat.

5. Verfahren nach einem der vorhergehenden Ansprüchen, **dadurch gekennzeichnet, daß** bei einem kurvigen, gewundenen Straßenverlauf bei einem Winkel von 50° oder weniger zwischen einer Fahrtrichtung und dem Verlauf eines Wegsegments (S), als Referenzpunkt (R) derjenige Punkt des Wegsegments (S) gewählt wird, der den geringste Abstand zur Fahrzeugposition (P) hat.

6. Verfahren nach einem der vorhergehenden Ansprüchen, **dadurch gekennzeichnet, daß** bei einem Winkel von mehr als 90° zwischen einer Fahrtrichtung und dem Verlauf eines Wegsegments (S), der vorangegangene Referenzpunkt (R) auf dem Wegsegment um die seit der vorangegangenen Messung zurückgelegte, gemessene Entfernung verschoben wird.

## Claims

1. Method for determining the position of a vehicle with the aid of digital route network data using a processor (12) and at least one sensor (13, 14) for determining a relative vehicle position, having the following steps:
- a relative vehicle position (P) and a direction of travel are measured by the sensor (13, 14),
**characterized in that**
- an angle between the direction of travel and a route segment (S) is determined,
- the angle is compared with a prescribed value, and
- if the angle is larger than the prescribed value, starting from the measured relative vehicle position (P) from the processor (12) on a line which runs essentially perpendicularly to the direction of travel, a reference point (R) is determined on the route segment (S) of the digital route network data.

2. Method according to Claim 1, **characterized in that** the processor (12) determines reference points (R) on both sides of the vehicle position (P) using all the route segments (S) which are within a defined distance from the vehicle position (P), in order to determine an absolute vehicle position from the plurality of reference points (R).

3. Method according to the preceding claim, **characterized in that** the relative vehicle position (P) and the associated reference points (R) are continually determined and stored, and **in that** the reference point (R) which is determined as the absolute vehicle position is that which is at the shortest distance from the vehicle position and is situated on a route segment (S) on which a reference point has been found during the preceding measurement.

4. Method according to one of the preceding claims, **characterized in that**, for an angle of 25° or less between a direction of travel and the shape of a route segment (S), the reference point (R) chosen is that point on the route segment (S) which is at the shortest distance from the vehicle position (P).

5. Method according to one of the preceding claims, **characterized in that**, for a twisting, winding road shape and an angle of 50° or less between a direction of travel and the shape of a route segment (S), the reference point (R) chosen is that point on the route segment (S) which is at the shortest distance from the vehicle position (P) .

6. Method according to one of the preceding claims, **characterized in that**, for an angle of more than 90° between a direction of travel and the shape of a route segment (S), the preceding reference point (R) on the route segment is shifted by the measured distance covered since the preceding measurement.

## Revendications

1. Procédé de détermination de la position d'un véhicule à l'aide de données numériques d'un réseau routier, comprenant un processeur (12) et au moins un capteur (13, 14) pour déterminer une position relative de véhicule, comprenant les étapes :
- une position relative (P) de véhicule et un sens de circulation sont mesurés par le capteur (13, 14),
**caractérisé en ce que**
- un angle est déterminé entre le sens de circulation et un segment de parcours (S),
- l'angle est comparé à une valeur donnée et
- qu'ensuite, si l'angle est supérieur à la valeur donnée, un point de référence (R) est déterminé sur le segment de parcours (S) des données numériques du réseau routier, partant de la position (P) relative du véhicule mesurée par le processeur (12) sur une ligne qui s'étend essentiellement perpendiculairement au sens de circulation.

2. Procédé selon la revendication 1, **caractérisé en ce que** le processeur (12) détermine des points de référence (R) au moyen de tous les segments de parcours, des deux côtés de la position du véhicule (P), ces segments de parcours étant à l'intérieur d'une distance définie par rapport à la position du véhicule (P), afin de déterminer une position de véhicule absolue à partir de la pluralité des points de référence (R).

3. Procédé selon l'une quelconque des revendications précédentes, **caractérisé en ce que** la position (P) relative du véhicule et les points de référence (R) correspondants à cette position sont déterminés et mémorisés en continu, et **en ce que** le point de référence (R), qui présente la plus petite distance par rapport à la position du véhicule et qui se trouve sur un segment de parcours (S), sur laquelle un point de référence a été trouvé lors de la mesure précédente, est déterminé comme la position de véhicule absolue.

4. Procédé selon l'une quelconque des revendications précédentes, **caractérisé en ce que**, en cas d'un angle de 25° ou moins entre un sens de circulation et l'allure d'un segment de parcours (S), le point du segment de parcours (S) qui a la plus petite distance par rapport à la position (P) du véhicule est sélectionné comme point de référence (R).

5. Procédé selon l'une quelconque des revendications précédentes, **caractérisé en ce que**, en cas d'une allure de route sinueuse à virages, avec un angle de 50° ou moins entre un sens de circulation et l'allure d'un segment de parcours (S), le point du segment de parcours (S) qui a la plus petite distance par rapport à la position (P) du véhicule est sélectionné comme point de référence (R).

6. Procédé selon l'une quelconque des revendications précédentes, **caractérisé en ce que**, en cas d'un angle supérieur à 90° entre un sens de circulation et l'allure d'un segment de parcours (S), le point de référence (R) précédent est déplacé sur le segment de parcours de la distance parcourue mesurée depuis la mesure précédente.
